# EUROPEAN PATENT APPLICATION

(11) **EP 4 660 862 A1**
(43) Date of publication of application: **10.12.2025**
(21) Application number: 24179648.1
(22) Date of filing: 03.06.2024
(51) Int. Cl.: G06F 30/10, G06F 30/27, G06F 111/10, G06F 111/18

(54) **A METHOD AND SYSTEM FOR PROVIDING A DIGITAL TWIN OF A PHYSICAL ASSET**

(71) Applicant: Siemens Aktiengesellschaft, 80333 München (DE)
(72) Inventor: Sauer, Markus, 81739 München (DE); Singh, Saurabh Narayan, 81739 München (DE)
(74) Representative: Siemens Patent Attorneys

(57) **Abstract**

A method and system for providing a digital twin (DT) of a physical asset comprising an asset representation loader (ARL) adapted to load a virtual asset representation of the physical asset; an asset compare and lookup unit (ACL) adapted to process the loaded virtual asset representation of the physical asset to provide an asset class of the respective physical asset and/or to extract metadata related to identified physical characteristics of the respective physical asset; and a large digital twin model (LDTM) comprising a generative transformer pre-trained on digital twins (DTs) adapted to derive a digital twin (DT) of the physical asset based on the loaded virtual asset representation of the physical asset and the asset class and/or the extracted metadata of the physical asset provided by the asset compare and lookup unit (ACL).

## Description

The invention relates to a computer-implemented method and system for providing a digital twin (DT) of a physical asset and in particular to a method and system for generating a digital twin based on an Artificial Intelligence based Large Digital Twin Model in a metaverse environment.

The development of DT models conventionally happens either by reconfiguring parameters of an existing Digital Twin, assembling existing DTs as components to a combined Digital Twin, or by building new Digital Twin models completely from scratch.

Building of digital twins models DTs is done mostly manually by humans. The building and validation of digital twins DT is cumbersome and time consuming. The building and validation of digital twins DT requires a high amount of effort. Provision of Digital Twins DTs is thus expensive especially if they are not directly built during the design of the associated physical asset. Conventional approaches of creating a Digital Twin model require that the operational steps are performed by humans.

Accordingly, it is an object of the present invention to provide a method and a system which are capable of deriving automatically Digital Twin models for assets.

This object is achieved by a computer-implemented method for providing a digital twin of a physical asset comprising the features of claim 1.

The invention provides according to a first aspect a computer-implemented method for providing a digital twin of a physical asset comprising the steps of:
providing a virtual asset representation of the physical asset by an asset representation loader;
processing the provided virtual asset representation of the physical asset by an asset compare and lookup unit to provide an asset class and of the respective physical asset and/or to extract metadata related to identified physical characteristics of the respective physical asset;
feeding the asset class of the respective physical asset and/or the extracted metadata related to identified physical characteristics of the respective physical asset to a large digital twin model comprising a generative transformer pre-trained on digital twins; and
deriving a digital twin of the physical asset by the large digital twin model based on the virtual asset representation of the physical asset and the asset class and/or the extracted metadata of the physical asset.

The method of the present invention makes use of larger Digital Twin model repositories. This is due to the rise of the industrial Metaverse vision and of the physical patterns and existing Digital Twins which can be used to build a system. This allows to derive a Large Digital Twin Model which can be used to generate proposals for Digital Twins DTs based on a physical asset representation in an industrial Metaverse Setup.

There is a high-level of physical similarity in the behavioral and static characteristics of physical models that is used by the method according to the present invention to automate post-engineering digital-twin generation.

With the computer-implemented method for providing a digital twin of a physical asset according to the first aspect of the present invention Digital Twin models (referred to simply as digital twins) can be automatically built or retrieved based on derived characteristics and patterns detected in a partial or complete machine-based analysis of a virtual or physical model of a specific system.

A key idea underlying the present invention is to provide a large digital twin model LDTM which makes use of physical, composition, structural, behavioral patterns of a large set of known Digital Twin models stored in a repository for an industrial Metaverse application.

The concept of digital twins DTs in the context of automation systems refers to creating a virtual representation or model of a physical machine or system. This digital representation is a real-time, dynamic simulation that mirrors the behavior, characteristics, and status of its physical counterpart, i.e. the physical asset or entity such as a machine. Digital twins can be used in various industries, including manufacturing, healthcare, and infrastructure.

In a possible embodiment of the computer-implemented method for providing a digital twin of a physical asset the provided virtual representation of the physical asset comprises a three-dimensional point cloud generated by a scanner representing a physical shape and/or a physical structure of the physical asset in a captured scene.

In a possible embodiment of the computer-implemented method for providing a digital twin of a physical asset the provided virtual representation of the physical asset comprises sensor data representing a functional behavior of the physical asset.

In a possible embodiment of the computer-implemented method for providing a digital twin of a physical asset the virtual asset representation of the physical asset provided by the asset representation loader is loaded to an executable application, in particular to a metaverse application.

In a possible embodiment of the computer-implemented method for providing a digital twin of a physical asset the application runs a scene decomposer to decompose the loaded virtual asset representation of a complex physical asset within a captured scene into virtual asset representations of identified sub-assets of the complex physical asset using boundary functions and/or ray tracing.

In a possible embodiment of the computer-implemented method for providing a digital twin of a physical asset the application supplies the asset class of the respective physical asset or sub-asset and/or the metadata related to identified physical characteristics of the respective physical asset or sub-asset and the virtual asset representation of the physical asset or sub-asset to the large digital twin model.

In a possible embodiment of the computer-implemented method for providing a digital twin of a physical asset the large digital twin model comprises a digital twin trained suggestion mechanism which compares looked up asset class related data of the asset class of the respective physical asset or sub-asset received by the large digital twin model from the application with the extracted metadata related to identified physical characteristics of the respective physical asset or sub-asset received by the large digital twin model from the application to find a matching digital twin stored in a repository.

In a possible embodiment of the computer-implemented method for providing a digital twin of a physical asset if an exactly matching digital twin is found by the a digital twin trained suggestion mechanism of the large digital twin model the matching digital twin is returned by the large digital twin model to the application.

In a possible embodiment of the computer-implemented method for providing a digital twin of a physical asset if no exactly matching digital twin but similar digital twins are found by the a digital twin trained suggestion mechanism of the large digital twin model the digital twin trained suggestion mechanism provides a set of properties of the similar digital twins.

In a possible embodiment of the computer-implemented method for providing a digital twin of a physical asset the set of properties of the similar digital twins provided by the digital twin trained suggestion mechanism is processed by the generative transformer of the large digital twin model to build a digital twin for the respective physical asset or sub-asset received by the large digital twin model from the application.

In a possible embodiment of the computer-implemented method for providing a digital twin of a physical asset the built digital twin for the respective physical asset or sub-asset generated by the generative transformer of the large digital twin model is returned by the large digital twin model to the application and suggested as a possible digital twin for the respective asset to a user via a user interface of the application.

In a possible embodiment of the computer-implemented method for providing a digital twin of a physical asset parameters of the suggested digital twin are adapted in response to user input provided via the user interface of the application to optimize the suggested digital twin.

In a possible embodiment of the computer-implemented method for providing a digital twin of a physical asset the user feedback with respect to a quality of the suggested digital twin provided via the user interface of the application is used to train the digital twin trained suggestion mechanism of the large digital twin model.

The invention further provides according to a second aspect a system for providing a digital twin of a physical asset comprising:
an asset representation loader adapted to load a virtual asset representation of the physical asset;
an asset compare and lookup unit adapted to process the loaded virtual asset representation of the physical asset to provide an asset class and of the respective physical asset and/or to extract metadata related to identified physical characteristics of the respective physical asset; and
a large digital twin model comprising a generative transformer pre-trained on digital twins adapted to derive a digital twin of the physical asset based on the virtual asset representation of the physical asset and the asset class and/or the extracted metadata of the physical asset provided by the asset compare and lookup unit.

In a possible embodiment of the system for providing a digital twin of a physical asset the provided virtual representation of the physical asset comprises a three-dimensional point cloud generated by a scanner representing a physical shape and/or a physical structure of the physical asset in a captured scene and/or sensor data representing a functional behavior of the physical asset.

In a possible embodiment of the system for providing a digital twin of a physical asset the virtual asset representation of the physical asset provided by the asset representation loader is loaded to an application, in particular a metaverse application, executed on a processor of the system and adapted to run a scene decomposer to decompose the loaded virtual asset representation of a complex physical asset within a captured scene into virtual asset representations of identified sub-assets of the complex physical asset using boundary functions and/or ray tracing and adapted to supply the asset class of the respective physical asset or sub-asset and/or the metadata related to identified physical characteristics of the respective physical asset or sub-asset and the virtual asset representation of the physical asset or sub-asset to the large digital twin model of the system.

In a possible embodiment of the system for providing a digital twin of a physical asset the large digital twin model comprises a digital twin trained suggestion mechanism adapted to compare looked up asset class related data of the asset class of the respective physical asset or sub-asset received by the large digital twin model from the application with the extracted metadata related to identified physical characteristics of the respective physical asset or sub-asset received by the large digital twin model from the application to find a matching digital twin stored in a repository of the system.

In a possible embodiment of the system for providing a digital twin of a physical asset if an exactly matching digital twin is found by the digital twin trained suggestion mechanism of the large digital twin model of the system the matching digital twin is returned by the large digital twin model of the system to the application executed on a processor of the system,

In a possible embodiment of the system for providing a digital twin of a physical asset if no exactly matching digital twin but similar digital twins are found by the a digital twin trained suggestion mechanism of the large digital twin model of the system the digital twin trained suggestion mechanism provides a set of properties of the found similar digital twins which is processed by the generative transformer of the large digital twin model to build a digital twin for the respective physical asset or sub-asset received by the large digital twin model from the application,
In a possible embodiment of the system for providing a digital twin of a physical asset the built digital twin for the respective physical asset or sub-asset generated by the generative transformer of the large digital twin model is returned by the large digital twin model of the system to the application and suggested as a possible digital twin for the respective asset to a user via a user interface of the application executed on the processor of the system.

In a possible embodiment of the system for providing a digital twin of a physical asset parameters of the suggested digital twin are adapted in response to user input provided via the user interface of the application to optimize the suggested digital twin.

In a possible embodiment of the system for providing a digital twin of a physical asset user feedback with respect to a quality of the suggested digital twin provided via the user interface of the application is used to train the digital twin trained suggestion mechanism of the large digital twin model of the system.

In a possible embodiment of the system for providing a digital twin of a physical asset the virtual asset representation of a physical asset provided by an asset representation loader comprises the virtual asset representation of a machine of a machine line within a factory floor.

The invention further provides according to a third aspect an industrial automation system comprising machines as physical assets and a system for providing digital twins of the physical assets of the industrial automation system a system for providing a digital twin of a physical asset having:
an asset representation loader adapted to load a virtual asset representation of the physical asset;
an asset compare and lookup unit adapted to process the loaded virtual asset representation of the physical asset to provide an asset class and of the respective physical asset and/or to extract metadata related to identified physical characteristics of the respective physical asset; and having
a large digital twin model comprising a generative transformer pre-trained on digital twins adapted to derive a digital twin of the physical asset based on the virtual asset representation of the physical asset and the asset class and/or the extracted metadata of the physical asset provided by the asset compare and lookup unit.

The invention further provides according to a fourth aspect a computer program product comprising a program having program instructions stored on a data storage adapted to perform a method according to the first aspect of the present invention when executed on a processor.

In the following embodiments of the different aspects of the present invention are described in more detail with respect to the enclosed figures.
Fig. 1 shows a flow chart for illustrating a possible exemplary embodiment of the computer-implemented method for providing a digital twin of a physical asset according to a first aspect of the present invention;
Fig.2 shows a block diagram for illustrating a possible exemplary embodiment of a system for providing a digital twin of a physical asset according to a second aspect of the present invention;
Fig.3 shows a signal diagram for illustrating a possible exemplary implementation of the computer-implemented method for providing a digital twin of a physical asset according to a first aspect of the present invention;

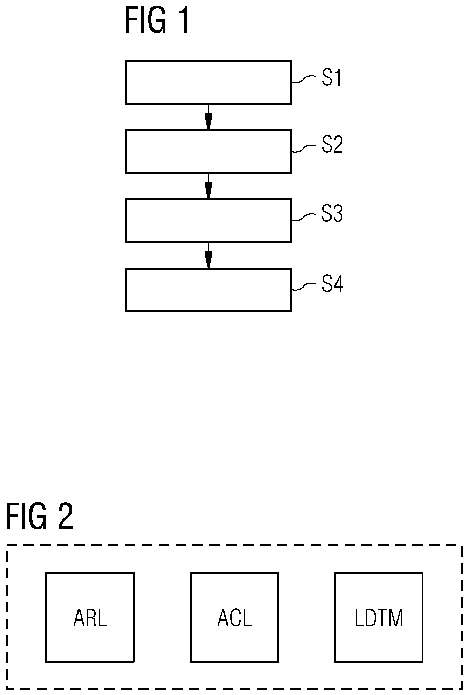

As can be seen in Fig. 1 a computer-implemented method for providing a digital twin of a physical asset (such as a machine M of an industrial automation system) according to the first aspect of the present invention comprises several mains steps S. Fig. 2 illustrates schematically a system for performing the computer-implemented method.

In a first step S1 a virtual asset representation of the physical asset is provided by an asset representation loader (ARL).

In a possible embodiment the asset representation loader ARL comprises a Point cloud loader (PCL). The point cloud loader PCL can comprise a generic software component that takes a point cloud format 3D scan of a room and loads it in the metaverse. In general, the virtual asset representation can comprise any format.

The virtual asset representation virtual of the physical asset such a machine (e.g. a motor) comprises in a preferred embodiment a 3D point cloud. The provided virtual representation of the physical asset comprises a three dimensional point cloud generated by a scanner representing a physical shape and/or a physical structure of the physical asset in a captured scene.

The provided virtual representation of the physical asset can further comprise sensor data representing a functional behavior of the physical asset. This sensor data comprises for example a video showing the operational behavior of the physical asset.

In a further step S2 of the computer-implemented method illustrated in Fig. 1 the provided virtual asset representation of the physical asset is processed by an asset compare and lookup unit (ACL) to provide an asset class and of the respective physical asset and/or to extract metadata related to identified physical characteristics of the respective physical asset.

The asset compare and lookup unit ACL can take a virtual representation of the physical asset such as a machine M of an industrial automation system as input (e.g. the point cloud of the physical asset) and can provide a comparable digital twin category or digital twin class for the physical asset and/or can identify physical characteristics of the physical asset. The class or category can indicate for example based on the shape of the point cloud whether the physical asset is a chair or a TV-apparatus or a motor. The physical characteristics can comprise the size of the physical asset, specific 3D geometry patterns of the physical asset as well as connections of the physical asset to other physical assets or components.

In a further step S3 the asset class of the respective physical asset and/or the extracted metadata related to identified physical characteristics of the respective physical asset are fed to a large digital twin model (LDTM) comprising a generative transformer pre-trained on digital twins (DTs).

In a further step S4 a digital twin DT of the physical asset is derived by the large digital twin model LDTM based on the virtual asset representation of the physical asset and the asset class and/or the extracted metadata of the physical asset.

The Large Digital Twin Model LDTM comprises a model trained on various digital twins DTs. It can identify digital twins DTs based on the physical characteristics, interconnection of components, etc. e.g. a point cloud shape. For example, it can look at the point cloud of a physical asset such as a machine (e.g. motor) and can tell that it is a motor. But additionally, it can make use of a Digital Twin Trained Suggestion Mechanism DTTSM.

The Digital Twin Trained Suggestion Mechanism DTTSM can return either an exact match of the shape and corresponding digital twin DT identified from the virtual representation of the physical asset including a point cloud (if it identifies the motor for example) or it can suggest a set of properties and simulation behaviors for the newly derived digital twin based on the Large Digital Twin Model LDTM.

In a possible embodiment of the computer-implemented method for providing a digital twin of a physical asset the virtual asset representation of the physical asset provided by the asset representation loader ARL is loaded to an application, in particular to a metaverse (IMV) application.

With the application a user can load and decompose a complex asset into smaller less complex assets. The application runs in a preferred embodiment a scene decomposer (SD) to decompose the loaded virtual asset representation of a complex physical asset within a captured scene into virtual asset representations of identified sub-assets of the complex physical asset using for instance boundary functions and/or ray tracing. Since the point cloud images can represent complex physical assets, they might need to be broken down into smaller assets using the scene decomposer run by the application. For example, a factory floor might have to be converted into a machine line, individual motors and so on.

A Metaverse application allows a user to load, model, and/or decompose the virtual representation of a physical asset such as a machine of a factory floor for which the user likes to generate a new Digital Twin model for the Metaverse Application. This virtual asset representation of the physical asset (e.g., a 3D Scan Point Cloud, or a 3D video showing the behavior of the asset) is then supplied to the Large Digital Twin Model LDTM and the generation process for generating the digital twin DT starts.

Based on the Large Digital Twin Model LDTM and the input key properties the input can be analyzed (e.g., it's a motor, has cooling at position X, a controller is connected, screws are a place z, the diameter is a, etc.). These parameters together with the pre-trained large digital twin model LDTM are then used to perform a generative transformation step to derive a new Digital Twin model, which can then be optimized by a user based on the provided characteristics and potential options from the large digital twin model.

In a possible embodiment of the computer-implemented method for providing a digital twin of a physical asset the application supplies the asset class of the respective physical asset or sub-asset and/or the metadata related to identified physical characteristics of the respective physical asset or sub-asset and the virtual asset representation of the physical asset or sub-asset to the large digital twin model LDTM.

In a possible embodiment of the computer-implemented method for providing a digital twin of a physical asset the large digital twin model LDTM comprises a digital twin trained suggestion mechanism DTTSM. The digital twin trained suggestion mechanism DTTSM compares looked up asset class related data of the asset class of the respective physical asset or sub-asset received by the large digital twin model LDTM from the application with the extracted metadata related to identified physical characteristics of the respective physical asset or sub-asset received by the large digital twin model LDTM from the application to find a matching digital twin stored in a repository.

If an exactly matching digital twin is found by the a digital twin trained suggestion mechanism DTTSM of the large digital twin model LDTM the matching digital twin DT is returned by the large digital twin model (LDTM) to the application.

If no exactly matching digital twin but similar digital twins DTs are found by the a digital twin trained suggestion mechanism DTTSM of the large digital twin model LDTM the digital twin trained suggestion mechanism DTTSM provides a set of properties of the similar digital twins DTs.

The set of properties of the similar digital twins DTs provided by the digital twin trained suggestion mechanism DTTSM is processed by the generative transformer of the large digital twin model LDTM to build a digital twin for the respective physical asset or sub-asset received by the large digital twin model LDTM from the application. The built digital twin DT for the respective physical asset or sub-asset generated by the generative transformer of the large digital twin model LDTM is returned by the large digital twin model LDTM to the application and suggested as a possible digital twin DT for the respective asset to a user via a user interface of the application.

In a possible embodiment of the computer-implemented method for providing a digital twin of a physical asset parameters of the suggested digital twin are adapted in response to user input provided via the user interface of the application to optimize the suggested digital twin.

Once a user has received the suggested digital twin DT generated by the generative transformer with initial properties, the user has a choice to input and update certain parameters and configurations if needed and can test the behavior of the generated Digital Twin. An Input DT detail (IDTD) interface allows a user to provide input that is then passed on to the newly generated Digital Twin Model and optionally to the large digital twin model LDTM and its digital twin trained suggestion mechanism DTTSM to improve the generation and derivation process for the next time.

The user feedback with respect to a quality of the suggested digital twin DT provided via the user interface of the application is used to train the digital twin trained suggestion mechanism DTTSM of the large digital twin model LDTM.

The invention further provides according to a second aspect a system for providing a digital twin of a physical asset as illustrated schematically in the block diagram of Fig.2
The system comprises an asset representation loader ARL adapted to load a virtual asset representation of the physical asset-

The system further comprises an asset compare and lookup unit ACL adapted to process the loaded virtual asset representation of the physical asset to provide an asset class and of the respective physical asset and/or to extract metadata related to identified physical characteristics of the respective physical asset.

The system further comprises a large digital twin model LDTM having a generative transformer pre-trained on digital twins DTs and adapted to derive a digital twin DT of the physical asset based on the virtual asset representation of the physical asset and the asset class and/or the extracted metadata of the physical asset provided by the asset compare and lookup unit ACL.

The transformer architecture is a type of neural network architecture implanted by the generative transformer of the large digital twin model LDTM relies on self-attention mechanisms to process input data in parallel, making it highly efficient for capturing long-range dependencies. The generative transformer comprises a bunch of encoders and decoders stacked one on top of each other. The generative pre-trained transformer of the large digital twin model LDTM comprises several encoders stacked in an autoregressive manner. Each encoder layer processes the input sequence independently in parallel, allowing for efficient training and inference. Each encoder is composed of two parts namely a Self-Attention Layer and Feed Forward Neural Network, while each decoder has three parts including a Self-Attention Layer, a Decoder Attention Layer and a Feed Forward Neural Network.

In a possible embodiment of the system for providing a digital twin DT of a physical asset as s shown in Fig. 2 the provided virtual representation of the physical asset comprises a three-dimensional point cloud generated by a scanner representing a physical shape and/or a physical structure of the physical asset in a captured scene and/or sensor data representing a functional behavior of the physical asset.

In a possible embodiment of the system for providing a digital twin DT of a physical asset as illustrated in Fig.2 the virtual asset representation of the physical asset provided by the asset representation loader ARL is loaded to an application, in particular a metaverse (IMV) application.

The application can be executed on a processor of the system and is adapted to run a scene decomposer SD. The scene decomposer SD can be used to decompose the loaded virtual asset representation of a complex physical asset within a captured scene into virtual asset representations of identified sub-assets of the complex physical asset. The scene decomposer SD can in a possible embodiment of the system apply boundary functions and/or ray tracing to decompose the loaded virtual asset representation of a complex physical asset within a captured scene into virtual asset representations of identified sub-assets of the complex physical asset.

The application can supply the asset class of the respective physical asset or sub-asset and/or the metadata related to identified physical characteristics of the respective physical asset or sub-asset and the virtual asset representation of the physical asset or sub-asset to the large digital twin model LDTM of the system.

In a possible embodiment of the system for providing a digital twin DT of a physical asset as shown in Fig.2 the large digital twin model LDTM comprises a digital twin trained suggestion mechanism DTTSM. The digital twin trained suggestion mechanism DTTSM is adapted to compare looked up asset class related data of the asset class of the respective physical asset or sub-asset received by the large digital twin model LDTM from the application with the extracted metadata related to identified physical characteristics of the respective physical asset or sub-asset received by the large digital twin model LDTM from the application to find a matching digital twin DT stored in a repository of the system.

If an exactly matching digital twin is found by the digital twin trained suggestion mechanism DTTSM of the large digital twin model LDTM of the system the matching digital twin DT is returned by the large digital twin model LDTM of the system to the application executed on a processor of the system,

If no exactly matching digital twin but similar digital twins DTs are found by the a digital twin trained suggestion mechanism DTTSM of the large digital twin model LDTM of the system the digital twin trained suggestion mechanism DTTSM provides a set of properties of the found similar digital twins DTs which is processed by the generative transformer of the large digital twin model LDTM to build a digital twin for the respective physical asset or sub-asset received by the large digital twin model LDTM from the application.

The built digital twin (DT) for the respective physical asset or sub-asset generated by the generative transformer of the large digital twin model LDTM is returned by the large digital twin model LDTM of the system to the application and suggested as a possible digital twin DT for the respective asset to a user via a user interface of the application executed on the processor of the system.

Parameters of the suggested digital twin DT can be adapted in response to user input provided via the user interface of the application to optimize the suggested digital twin DT.

Feedback with respect to a quality of the suggested digital twin DT provided via the user interface of the application can be used to train the digital twin trained suggestion mechanism DTTSM of the large digital twin model LDTM of the system.

In a possible embodiment of the system for providing a digital twin of a physical asset the virtual asset representation of a physical asset provided by an asset representation loader ARL comprises the virtual asset representation of a machine M of a machine line within a factory floor.

The invention further provides according to a third aspect an industrial automation system comprising machines M as physical assets and a system for providing digital twins DT of the physical assets of the industrial automation system.

The industrial automation system comprises an integrated or connected digital twin generation system for providing a digital twin DT of a physical asset having an asset representation loader ARL adapted to load a virtual asset representation of the physical asset. The digital twin generation system comprises an asset compare and lookup unit ACL adapted to process the loaded virtual asset representation of the physical asset to provide an asset class and of the respective physical asset and/or to extract metadata related to identified physical characteristics of the respective physical asset. The digital twin generation system comprises a large digital twin model LDTM comprising a generative transformer pre-trained on digital twins DTs adapted to derive a digital twin DT of the physical asset based on the virtual asset representation of the physical asset and the asset class and/or the extracted metadata of the physical asset provided by the asset compare and lookup unit ACL.

The invention further provides according to a fourth aspect a computer program product comprising a program having program instructions stored on a data storage adapted to perform a method according to the first aspect of the present invention when executed on a processor.

In the method according to the present invention a generative pre-trained transformers (GPT) procedure is applied to physical properties of devices, systems, solutions and algorithms targeting the virtual analysis of the assets in an industrial Metaverse scenario, for automatic derivation and generation of new Digital Twin models.

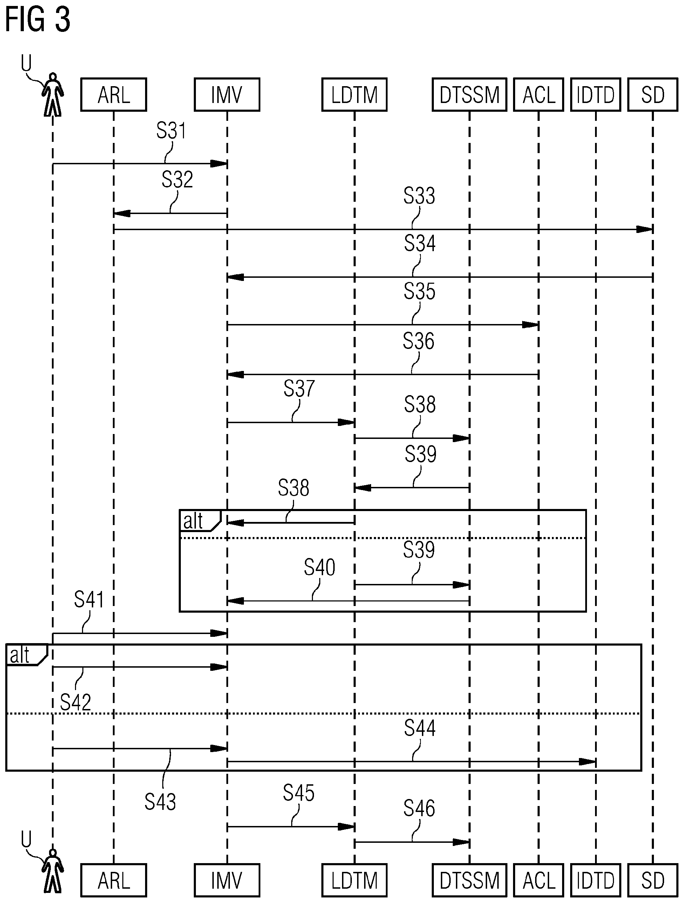

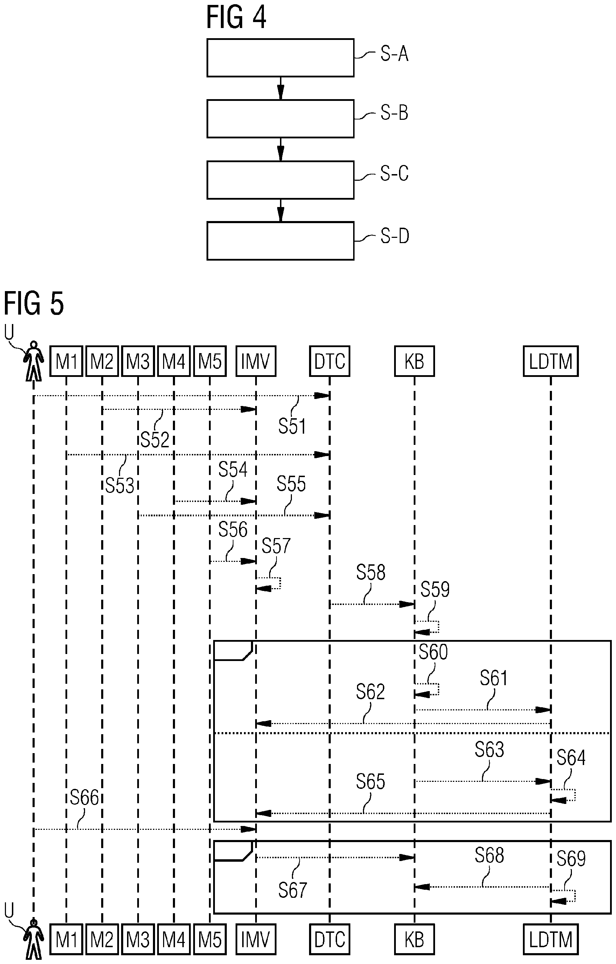

Initially a user starts an application, in particular a metaverse application IMV as illustrated in Fig.3.

Using for instance a file explorer, a point cloud PC as a virtual representation of a physical asset such as a machine can be loaded in step S31 by the application IMV into the scene by means of the asset representation loader ARL as illustrated in the signal diagram of Fig.3. The asset representation loader ARL loads in step S32 the point cloud PC and creates a scene out of it.

The scene decomposer SD then takes in step S33 the complex asset and uses boundary functions and ray tracing to identify the individual assets in the complex scene. It returns the individuals assets in step S34 to the application IMV as shown in Fig.3.

The application IMV sends the loaded virtual asset representation of the individual asset such as a motor, (its point cloud coordinates) to the asset compare and lookup unit ACL.

An asset compare and lookup unit ACL is used to process the virtual asset representation of the individual assets received from the application IMV to provide an asset class and of the respective physical asset and/or to extract metadata related to identified physical characteristics of the respective assets.

In response to a look-up request from the application IMV in step S35 the asset compare and lookup unit ACL returns the digital twin class of the individual asset to the application IMV in step S36 as shown in Fig.3.

For example, the asset compare and lookup unit ACL classifies the individual asset to be a motor. The other meta characteristics are also analysed if possible as metadata - e.g. the dimensions and other details of the motor are attached to the metadata. For example, the model can be identified based on the engraving or color, or number of bases, or color of fins, or number of buttons on the motor.

The application IMV receives in step S36 the digital twin class and the metadata. It sends the digital twin class along with the point cloud extracted information to large digital twin model LDTM in step S37.The application IMV further sends in step S37 a request to retrieve the closest available digital twin DT to the large digital twin model LDTM.

The large digital twin model LDTM communicates with its digital twin trained suggestion mechanism DTTSM. The digital twin trained suggestion mechanism DTTSM compares looked up asset class related data of the asset class of the respective physical asset or sub-asset received by the large digital twin model LDTM from the application IMV in step s36 with the extracted metadata related to identified physical characteristics of the respective physical asset or sub-asset received by the large digital twin model LDTM from the application to find a matching digital twin DT stored in a repository of the system.

The digital twin trained suggestion mechanism DTTSM of the large digital twin model LDTM compares the digital twin extracted information with the digital twin class related data. For example, the size of the motor with other motors in the digital twin lookup class.

Based on the comparison, there are two possibilities:
Either an exact match is found or an exact match is not found but similar digital twins DTs are found by the digital twin trained suggestion mechanism DTTSM.

If an exactly matching digital twin DT is found by the digital twin trained suggestion mechanism DTTSM of the large digital twin model LDTM of the system the matching digital twin DT is returned by the large digital twin model LDTM of the system to the application in step S38 as illustrated in Fig.3. If the DTTSM finds an exact DT matching the point cloud and extracted metadata the digital twin DT is returned via the LDTM to the application IMV.

If no exactly matching digital twin but similar digital twins DTs are found by the digital twin trained suggestion mechanism DTTSM the LDTM can request in step S39 the digital twin trained suggestion mechanism DTTSM to provide digital twin properties of the similar digital twins.

The digital twin trained suggestion mechanism DTTSM sends in step S40 an approximate property list of what the digital twin DT could be like. For example, the digital twin trained suggestion mechanism DTTSM can return, that the asset looks like a motor built by company X and based on the dimensions and number of fins, most probably supports Y RPM and can get heated after running for Z seconds. This information is derived out of the combined data of various makes and models of motors that the LDTM and DTTSM has been trained on.

With this information a generative transformer of the large digital twin model LDTM builds a Digital Twin DT which has the highest probability to match what could be identified from the virtual asset representation of the asset.

The digital twin trained suggestion mechanism DTTSM provides a set of properties of the found similar digital twins DTs. The set of properties is processed by the generative transformer of the large digital twin model LDTM to build a digital twin DT for the respective physical asset or sub-asset received by the large digital twin model LDTM from the application.

The built digital twin DT for the respective physical asset or sub-asset generated by the generative transformer of the large digital twin model LDTM is returned in step S40 along with the properties list to the application as illustrated in Fig.3.

A user can verify in step S41 the returned digital twin based on the properties of the physical asset. The user verifies the digital twin DT by comparing it to the actual physical object or asset.

If the returned digital twin DT is an exact match, the user accepts in step S42 the returned digital twin DT.

If a new digital twin DT has been created by the generative transformer of the large digital twin model LDTM, the user can provide feedback in step S43 on the DT quality; for example, whether it comprises the correct DT class, whether it has the correct brand and/or whether it is a valid digital twin DT. The user can also provide feedback on the DT properties; for example, how close the guessed RPM tis to the actual expected RPM.

Parameters of the suggested digital twin DT can be adapted or updated in step S44 in response to user input provided via the user interface of the application using the IDTD to optimize the suggested digital twin as illustrated in the signal diagram of Fig.3.

Further feedback with respect to a quality of the suggested digital twin (DT) provided via the user interface of the application can be used to train the digital twin trained suggestion mechanism DTTSM of the large digital twin model LDTM of the system as illustrated in the signal diagram of Fig.3. Based on the user feedback received in step S45, the LDTM learns and updates the suggestion mechanism DTSSM in Step S46.

The same process can be repeated for all the assets within the scene but also for compositions of the assets as the model LDTM improves and continuous to learn. For this explanation, we also take a motor as the individual asset as an example to explain the process in parallel.

The computer-implemented method can generate and propose of Digital Twins Models DTs for currently unknown variants of Digital Twin classes. This does reduce engineering efforts significantly and speeds up the process of building and adapting new Digital Twins.

The computer-implemented method can automatically harvest knowledge which went into creating existing Digital Twin models. This leads to a reduction of effort for new DT models.

The computer-implemented method further provides a continuous training of large digital twin model LDTM by a continuous feedback loop by a human user in a Metaverse scenario.

The computer-implemented method can be used to detect patterns and parameters of highest relevance in Digital Twin Modeling.

Independent of the grammatical term usage, individuals with male, female or other gender identities are included within the term.

## Claims

1. A computer-implemented method for providing a digital twin (DT) of a physical asset, the method comprising:
providing (S1) a virtual asset representation of the physical asset by an asset representation loader (ARL);
processing (S2) the provided virtual asset representation of the physical asset by an asset compare and lookup unit (ACL) to provide an asset class and of the respective physical asset and/or to extract metadata related to identified physical characteristics of the respective physical asset;
feeding (S3) the asset class of the respective physical asset and/or the extracted metadata related to identified physical characteristics of the respective physical asset to a large digital twin model (LDTM) comprising a generative transformer pre-trained on digital twins (DTs); and
deriving (S4) a digital twin (DT) of the physical asset by the large digital twin model (LDTM) based on the virtual asset representation of the physical asset and the asset class and/or the extracted metadata of the physical asset.

2. The method of claim 1, wherein the provided virtual representation of the physical asset comprises a three dimensional point cloud generated by a scanner representing a physical shape and/or a physical structure of the physical asset in a captured scene.

3. The method according to any of the preceding claims, wherein the provided virtual representation of the physical asset comprises sensor data representing a functional behavior of the physical asset.

4. The method according to any of the preceding claims, wherein the virtual asset representation of the physical asset provided by the asset representation loader (ARL) is loaded to an application, in particular to a metaverse (IMV) application.

5. The method of claim 4, wherein the application runs a scene decomposer to decompose the loaded virtual asset representation of a complex physical asset within a captured scene into virtual asset representations of identified sub-assets of the complex physical asset using boundary functions and/or ray tracing.

6. The method of claim 4 or claim 5, wherein the application supplies the asset class of the respective physical asset or sub-asset and/or the metadata related to identified physical characteristics of the respective physical asset or sub-asset and the virtual asset representation of the physical asset or sub-asset to the large digital twin model (LDTM) .

7. The method of claim 6, wherein the large digital twin model (LDTM) comprises a digital twin trained suggestion mechanism (DTTSM) which compares looked up asset class related data of the asset class of the respective physical asset or sub-asset received by the large digital twin model (LDTM) from the application with the extracted metadata related to identified physical characteristics of the respective physical asset or sub-asset received by the large digital twin model (LDTM) from the application to find a matching digital twin (DT) stored in a repository.

8. The method of claim 7, wherein if an exactly matching digital twin is found by the a digital twin trained suggestion mechanism (DTTSM) of the large digital twin model (LDTM) the matching digital twin (DT) is returned by the large digital twin model (LDTM) to the application.

9. The method of claim 7, wherein if no exactly matching digital twin but similar digital twins (DTs) are found by the a digital twin trained suggestion mechanism (DTTSM) of the large digital twin model (LDTM) the digital twin trained suggestion mechanism (DTTSM) provides a set of properties of the similar digital twins (DTs).

10. The method of claim 9, wherein the set of properties of the similar digital twins (DTs) provided by the digital twin trained suggestion mechanism (DTTSM) is processed by the generative transformer of the large digital twin model (LDTM) to build a digital twin for the respective physical asset or sub-asset received by the large digital twin model (LDTM) from the application.

11. The method of claim 10, wherein the built digital twin (DT) for the respective physical asset or sub-asset generated by the generative transformer of the large digital twin model (LDTM) is returned by the large digital twin model (LDTM) to the application and suggested as a possible digital twin (DT) for the respective asset to a user via a user interface of the application.

12. The method of claim 11, wherein parameters of the suggested digital twin (DT) are adapted in response to user input provided via the user interface of the application to optimize the suggested digital twin.

13. The method of claim 11 or claim 12, wherein the user feedback with respect to a quality of the suggested digital twin (DT) provided via the user interface of the application is used to train the digital twin trained suggestion mechanism (DTTSM) of the large digital twin model (LDTM).

14. A system for providing a digital twin (DT) of a physical asset, in particular by employing a method according to any of the preceding claims, the system comprising:
an asset representation loader (ARL) adapted to load a virtual asset representation of the physical asset;
an asset compare and lookup unit (ACL) adapted to process the loaded virtual asset representation of the physical asset to provide an asset class of the respective physical asset and/or to extract metadata related to identified physical characteristics of the respective physical asset; and
a large digital twin model (LDTM) comprising a generative transformer pre-trained on digital twins (DTs) adapted to derive a digital twin (DT) of the physical asset based on the loaded virtual asset representation of the physical asset and the asset class and/or the extracted metadata of the physical asset provided by the asset compare and lookup unit (ACL).

15. The system of claim 14, wherein the loaded virtual representation of the physical asset comprises a three dimensional point cloud generated by a scanner representing a physical shape and/or a physical structure of the physical asset in a captured scene and/or sensor data representing a functional behavior of the physical asset.

16. The system of claim 14 or claim 15, wherein the virtual asset representation of the physical asset loaded by the asset representation loader (ARL) is supplied to an application, in particular to a metaverse (IMV) application, executed on a processor of the system and adapted to run a scene decomposer to decompose the loaded virtual asset representation of a complex physical asset within a captured scene into virtual asset representations of identified sub-assets of the complex physical asset using boundary functions and/or ray tracing and adapted to supply the asset class of the respective physical asset or sub-asset and/or the metadata related to identified physical characteristics of the respective physical asset or sub-asset and the virtual asset representation of the physical asset or sub-asset to the large digital twin model (LDTM) of the system.

17. The system of claim 16, wherein the large digital twin model (LDTM) comprises a digital twin trained suggestion mechanism (DTTSM) which is adapted to compare looked up asset class related data of the asset class of the respective physical asset or sub-asset received by the large digital twin model (LDTM) from the application with the extracted metadata related to identified physical characteristics of the respective physical asset or sub-asset received by the large digital twin model (LDTM) from the application to find a matching digital twin (DT) stored in a repository of the system.

18. The system of claim 17, wherein if an exactly matching digital twin is found by the digital twin trained suggestion mechanism (DTTSM) of the large digital twin model (LDTM) of the system the matching digital twin (DT) is returned by the large digital twin model (LDTM) of the system to the application executed on a processor of the system, wherein if no exactly matching digital twin but similar digital twins (DTs) are found by the a digital twin trained suggestion mechanism (DTTSM) of the large digital twin model (LDTM) of the system the digital twin trained suggestion mechanism (DTTSM) provides a set of properties of the found similar digital twins (DTs) which is processed by the generative transformer of the large digital twin model (LDTM) to build a digital twin for the respective physical asset or sub-asset received by the large digital twin model (LDTM) from the application, wherein the built digital twin (DT) for the respective physical asset or sub-asset generated by the generative transformer of the large digital twin model (LDTM) is returned by the large digital twin model (LDTM) of the system to the application and suggested as a possible digital twin (DT) for the respective asset to a user via a user interface of the application executed on the processor of the system.

19. The system of claim 18, wherein parameters of the suggested digital twin (DT) are adapted in response to user input provided via the user interface of the application to optimize the suggested digital twin and user feedback with respect to a quality of the suggested digital twin (DT) provided via the user interface of the application is used to train the digital twin trained suggestion mechanism (DTTSM) of the large digital twin model (LDTM) of the system.

20. The system according to any of the preceding system based claims, wherein the virtual asset representation of a physical asset provided by an asset representation loader (ARL) comprises the virtual asset representation of a machine of a machine line within a factory floor.

21. An industrial automation system comprising machines as physical assets and comprising a system for providing digital twins (DT) of the physical assets of the industrial automation system according to any of the preceding claims 14 to 20.

22. A computer program product comprising a program having program instructions stored on a data storage adapted to perform a method according to any of the preceding claims 1 to 13 when executed on a processor.
